# EUROPÄISCHE PATENTSCHRIFT

(11) **EP 2 925 897 B1**
(45) Veröffentlichungstag und Bekanntmachung des Hinweises auf die Patenterteilung: **20.04.2016**
(21) Anmeldenummer: 13798251.8
(22) Anmeldetag: 20.11.2013
(51) Int. Cl.: C22C 9/04, C22C 9/01, C22C 9/05, A01L 1/00, A01L 1/02, A01L 15/00

(54) **VERWENDUNG EINER KUPFER-ZINK-LEGIERUNG**
USE OF A COPPER-ZINC ALLOY
UTILISATION D'UN ALLIAGE CUIVRE-ZINC

(30) Priorität: 12.03.2013 DE 102013004383
(43) Veröffentlichungstag der Anmeldung: 07.10.2015
(73) Patentinhaber: Diehl Metall Stiftung & Co. KG, 90552 Röthenbach (DE)
(72) Erfinder: GAAG, Norbert, 91207 Lauf (DE); GEISE, Jürgen, 90480 Nürnberg (DE)
(74) Vertreter: Diehl Patentabteilung
(86) Internationale Anmeldenummer: PCT/EP2013/003498
(87) Internationale Veröffentlichungsnummer: WO 2014/139548

(56) Entgegenhaltungen:
- WO-A1-2011/156931
- DE-A1- 2 902 032
- DE-A1- 2 919 478
- DE-A1-102004 058 318
- DE-A1-102005 015 467
- JP-A- S55 113 862

## Beschreibung

Die Erfindung betrifft eine neuartige Verwendung für eine Kupfer-Zink-Legierung der Zusammensetzung 59-73 Gew.-% Kupfer, 2,7-8,5 Gew.-% Mangan, 1,5-6,3 Gew.-% Aluminium, 0,2-4 Gew.-% Silizium, 0,2-3 Gew.-% Eisen, 0-2 Gew.-% Blei, 0-2 Gew.-% Nickel, 0-0,4 Gew.-% Zinn, einem Rest an Zink sowie unvermeidbaren Verunreinigungen. Die Anteile in Prozent beziehen sich hierbei und im Folgenden jeweils auf Gewichtsprozent.

Aus der EP 0 853 880 A2 und aus der US 6,059,043 A ist die Verwendung einer Kupfer-Legierung als Werkstoff für ein Hufeisen bekannt. Angaben über die Zusammensetzung der Kupfer-Legierung sind nicht beschrieben. Gegenüber dem Werkstoff Stahl, der üblicherweise für ein Hufeisen eingesetzt wird, zeigt eine Kupfer-Legierung eine höhere Duktilität und somit eine bessere Verarbeitbarkeit beim Schmieden. Das Dämpfungsverhalten einer Kupfer-Legierung ist besser als das von Stahl. Zudem weist Kupfer antimikrobielle Eigenschaften auf, die vorteilhaft bei dem Einsatz als Hufeisen sind. Aus der WO2011/156931 A1 ist die Verwendung einer Kupfer-Zink-Legierung mit 78,5-88,5 Gew-% Kupfer, 0,05-0,45 Gew.-% Mangan, 0,25-1.75 Gew.-% Aluminium, 0,05-0,45 Eisen sowie 10-20 Gew.-% Rest Zink bekannt.

Nachteiligerweise zeigt eine Kupfer-Legierung im Allgemeinen gegenüber Stahl einen für Hufeisen unzureichenden Verschleißwiderstand. Die Lebensdauer eines Hufeisens aus einer Kupfer-Legierung ist an sich gegenüber einem Hufeisen aus Stahl nicht akzeptabel.

Der vorliegenden Erfindung liegt die Aufgabe zugrunde, eine Kupfer-Legierung für eine Verwendung als Werkstoff für ein Hufeisen bereitzustellen, die bei guter Schmiedbarkeit für ein Hufeisen einen ausreichend hohen Verschleißwiderstand aufweist.

Diese Aufgabe wird erfindungsgemäß gelöst durch die Verwendung einer Kupfer-Zink-Legierung nach Anspruch 1 als Werkstoff für ein Hufeisen, wobei die Legierung 59-73 Gew.-% Kupfer, 2,7-8,5 Gew.-% Mangan, 1,5-6,3 Gew.-% Aluminium, 0,2-4 Gew.-% Silizium, 0,2-3 Gew.-% Eisen, 0- 2 Gew.-% Blei, 0-2 Gew.-% Nickel, 0-0,4 Gew.-% Zinn, einen Rest an Zink sowie unvermeidbare Verunreinigungen umfasst.

Damit wird eine neuartige Verwendung für eine Kupfer-Zink-Legierung angegeben, die in der DE 2919478 C2 mit einer ähnlichen Zusammensetzung als ein Werkstoff für Synchronringe angegeben ist. Die an sich bekannte Legierung weist in Kombination mit anderen intrinsischen Materialeigenschaften insbesondere einen hohen Reibungsbeiwert bzw. Reibungskoeffizienten auf. Aus der DE 10 2004 058 318 B4 ist weiter die Verwendung der vorgenannten Kupfer-Zink-Legierung als ein Werkstoff für eine Ventilführung bekannt. In der DE 10 2005 015 467 A1 wird für die vorgenannte Kupfer-Zink-Legierung eine Verwendung als Werkstoff für ein Gleitlager vorgeschlagen.

Durch den vergleichsweise hohen Anteil an a -Phase zeigt eine solche Kupfer-Zink-Legierung eine gute Duktilität und somit eine gute Schmiedbarkeit. Durch den härteren Messingmischkristall und durch die eingelagerten intermetallischen Phasen weist die Legierung jedoch eine gegenüber Kupfer deutlich erhöhte Härte zwischen 150 und 200 HB (Kupfer: 40 HB) auf. Die Bezeichnung HB bezieht sich dabei auf die so genannte Brinell-Härte, die normgemäß beispielsweise über den Eindruckdurchmesser einer Prüfkugel mit einem Durchmesser von 2,5 mm bei einer Prüfkraft von 62,5 N gemessen wird. Durch die Härte der Legierung ist zwar ein hoher Verschleißwiderstand gegeben, jedoch könnte dies auf ein gegenüber Kupfer verschlechtertes Dämpfungsverhalten schließen lassen.

Überraschend erkennt die Erfindung nun jedoch, dass das Dämpfungsverhalten der angegebenen Kupfer-Zink-Legierung ähnlich dem von Kupfer ist und insofern gegenüber Stahl deutlich verbessert ist. Die angegebene Kupfer-Zink-Legierung weist wie Kupfer ein Elastizitäts-Modul zwischen 100 GPa und 130 GPa auf. Das Elastizitäts-Modul von Stahl hingegen liegt im Bereich von etwa 200 GPa. Damit setzt die angegebene Kupfer-Zink-Legierung einer Verformung wie Kupfer einen deutlich geringeren Widerstand entgegen als Stahl, so dass eine für ein Hufeisen günstige Eigenschaft vorliegt. Der Fuß eines mit einem Hufeisen aus der angegebenen Kupfer-Zink-Legierung beschlagenen Pferdes wird deutlich weniger geprellt als mit einem Hufeisen aus Stahl.

Die Kupfer-Zink-Legierung lässt sich durch ein Aufschmelzen der Komponenten bei Temperaturen von ca. 1.000 °C, anschließendem halb- oder vollkontinuierlichem Strangguss sowie Strangpressen mit oder ohne Ziehen bei Temperaturen zwischen 700 °C und 750 °C in Stangenform herstellen. Nach dem Ablängen der Stange kann der Werkstoff weiter durch Gesenkschmieden und durch spanende Bearbeitung in die Rohform eines Hufeisens umgearbeitet werden. Alternativ kann der Werkstoff bereits beim Strangpressen in eine U-Form gebracht werden. Die noch mit Löchern für Hufnägel versehenen Röhformen der Hufeisen werden in verschiedenen Größen ausgeliefert. Durch Warmschmieden vor Ort wird das Hufeisen dann individuell an den zu beschlagenden Huf angepasst.

Die Kupfer-Zink-Legierung mit der angegebenen Zusammensetzung weist ein Gefüge auf, das einen α-Mischkristallanteil und einen β-Mischkristallanteil beinhaltet. Der auch als α-Phase bezeichnete α-Mischkristall aus Kupfer und Zink zeigt eine kubisch-flächenzentrierte Struktur. Die β-Phase bzw. der β-Mischkristall weist eine kubisch-raumzentrierte Struktur auf. Viele verschleißbeständige Kupfer-Zink-Legierungen zeigen im Gefüge überwiegend eine β-Phase. Dies macht die Legierung spröde. Die Duktilität ist für eine Hufeisenanwendung zu gering. Die angegebene Kupfer-Zink-Legierung weist jedoch einen ausreichenden Anteil an α-Phase auf, so dass die für einen Werkstoff für ein Hufeisen notwendige Duktilität bzw. Schmiedbarkeit gegeben ist. Abhängig von der spezifischen Zusammensetzung der Legierung und dem Temperaturgang während der Abkühlung beträgt der Anteil an α-Phase im Gefüge des Werkstoffs etwa zwischen 40 Gew.-% und 80 Gew.-%.

Die Härte der Kupfer-Zink-Legierung ist im Wesentlichen durch die intermetallischen Phasen, insbesondere durch Mangansilizide, gegeben. Über den Anteil an β-Phase im Gefüge kann die Härte des Werkstoffs zusätzlich eingestellt werden. Vorteilhafterweise wird daher die Kupfer-Zink-Legierung der angegebenen Zusammensetzung nach dem Schmieden vor Ort, also insbesondere bei einem Hufschmied, in Wasser abgeschreckt. Hierdurch erhöht sich im Gefüge des Werkstoffs der Anteil an β-Phase, wodurch die Härte und der Verschleißwiderstand vergrößert werden.

Mit anderen Worten bietet die vorliegende Kupfer-Zink-Legierung nach der Herstellung durch Strangpressen, Ablängen und Gesenkschmieden den Vorteil einer guten Schmiedbarkeit bei einem relativ hohen Anteil an α-Phase. Geeignete Schmiedetemperaturen liegen zwischen 650 °C und 750 °C (für Kupfer sind Schmiedetemperaturen zwischen 750 °C und 950 °C erforderlich). Nach dem Schmieden vor Ort wird dann der Werkstoff abgeschreckt, wodurch sich aufgrund des dann vergrößerten Anteils an β-Phase sein Verschleißwiderstand und seine Härte erhöhen.

Eine besondere Verwendung der angegebenen Kupfer-Zink-Legierung besteht demnach darin, dass die Legierung nach dem Gießen langsam und insbesondere passiv abgekühlt wird, dass aus der abgekühlten Legierung ein Rohhufeisen gefertigt wird, dass das Rohhufeisen vor Ort bei einer Schmiedetemperatur zwischen 650 °C und 750 °C nachbearbeitet wird, und dass das Hufeisen nach der Schmiedenachbearbeitung zum fertigen Hufeisen abgeschreckt wird. Insbesondere erfolgt die Abschreckung durch Eintauchen des geschmiedeten Hufeisens in Wasser.

Wird der Anteil an Kupfer über 73 Gew.-% hinaus vergrößert, so ist zum Warmverformen bzw. zum Schmieden ein erhöhter Kraftaufwand erforderlich, was für den Einsatz als Werkstoff für ein Hufeisen nachteilig ist. Wird der Anteil an Kupfer unter 59 Gew.-% verringert, so wächst im Gefüge der Anteil an β-Phase. Der Werkstoff wird spröde und weist dann keine ausreichende Duktilität mehr auf. Die Anteile an Eisen, Mangan und Silizium liegen im Gefüge als intermetallische Phasen vor, durch welche im Wesentlichen die Härte des Werkstoffs bestimmt ist. Aluminium dient der Mischkristall-Verfestigung. Ein Anteil an Blei verbessert die Zerspanbarkeit des Werkstoffs. Zinn und Nickel sind im Werkstoff gelöst. Nickel wirkt hierbei als Kupferersatz. Ein tolerierbarer Anteil an Zinn und Nickel ermöglicht die Wiederverwertung der Legierung im Schrottkreislauf.

In einer vorteilhaften Ausgestaltung umfasst die Legierung 63-73 Gew.-% Kupfer, 2,7-8,3 Gew.-% Mangan, 1,5-6 Gew.-% Aluminium, 0,2-4 Gew.-% Silizium, 0,2-2 Gew.-% Eisen, 0-2 Gew.-% Blei, 0-2 Gew.-% Nickel, 0-0,2 Gew.-% Zinn, einen Rest an Zink sowie unvermeidbare Verunreinigungen. Während viele verschleißbeständige Kupfer-Zink-Legierungen einen Kupferanteil von weniger als 63 Gew.-% aufweisen, um den höheren Verschleißwiderstand der harten β-Phase auszunützen, weist die vorliegende Legierung einen ausreichenden Verschleißwiderstand gerade bei Kupfer-Anteilen von mehr als 63 Gew.-% auf. Liegt jedoch Kupfer mit einem Anteil von mehr als 63 Gew.-% im Werkstoff vor, so zeigt der Werkstoff eine ausreichende antimikrobielle Wirkung, wie sie gerade für die Verwendung für ein Hufeisen von großem Vorteil ist. Ein Hufeisen aus der vorteilhaft weitergebildeten Kupfer-Zink-Legierung kombiniert somit die Vorteile von Kupfer, nämlich eine antimikrobielle Wirkung und ein gutes Dämpfungsverhalten, mit den Vorteilen von Stahl, nämlich eine lange Lebensdauer und eine hohe Verschleißbeständigkeit.

In Weiterbildung der Kupfer-Zink-Legierung sind 69-72 Gew.-% Kupfer umfasst. Der Anteil an Mangan beträgt zweckmäßigerweise 6-8 Gew.-%. Aluminium ist bevorzugt mit einem Anteil von 4-6 Gew.-% enthalten. Der Anteil an Silizium wird zweckmäßigerweise mit 1,5-2,5 Gew.-% gewählt. Eisen ist bevorzugt mit einem Anteil von 0,5-1,5 Gew.-% umfasst. Vorteilhaft beträgt der Anteil an Blei 0-1 Gew.-%. Nickel ist bevorzugt mit einem Anteil bis zu 0,2 Gew.% enthalten.

Vorteilhafterweise umfasst die Legierung zusätzlich eines der Elemente Chrom, Vanadium, Titan oder Zirkon mit je bis zu 0,1 Gew.-%. Die Zugabe dieser Elemente zu der Kupfer-Zink-Legierung wirkt kornfeinend.

Darüber hinaus kann die Kupfer-Zink-Legierung als Verwendung für ein Hufeisen zusätzlich Bor mit einem Anteil von ≤ 0,0005 Gew.-%, Antimon mit einem Anteil von s 0,03 Gew.-%. Phosphor mit einem Anteil von ≤ 0,03 Gew.-%, Cadmium mit einem Anteil von ≤ 0,03 Gew.-% und Kobalt mit einem Anteil von ≤ 0,05 Gew.-% umfassen.

Die eingangs gestellte Aufgabe wird erfindungsgemäß weiter durch ein Hufeisen gelöst, welches aus einer Kupfer-Zink-Legierung der vorbeschriebenen Zusammensetzungen hergestellt ist.

Beispielhaft wird durch Aufschmelzen der Komponenten bei einer Temperatur von 1.000 °C, anschließendem Stranggießen und Strangpressen bei einer Temperatur von 700 °C bis 750 °C und anschließendem passivem Abkühlen unter Raumtemperatur für ein Hufeisen eine Kupfer-Zink-Legierung der Zusammensetzung 70,5 Gew.-% Kupfer, 7,7 Gew.-% Mangan, 5,2 Gew.-% Aluminium, 1,8 Gew.-% Silizium, 1,1 Gew.-% Eisen, Rest Zink und unvermeidbare Verunreinigungen hergestellt. Durch Ablängen und Gesenkschmieden sowie durch spanendes Bearbeiten wird ein Rohhufeisen gefertigt. Das Rohhufeisen wird zur Endanpassung bei einer Temperatur von 700 °C warmgeschmiedet.

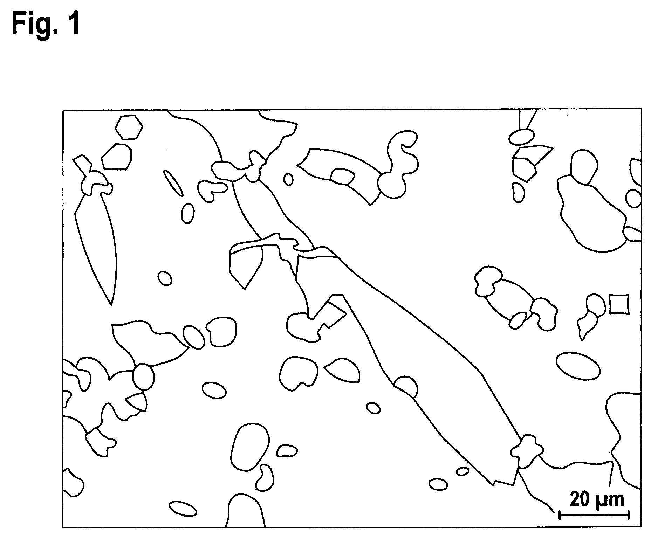

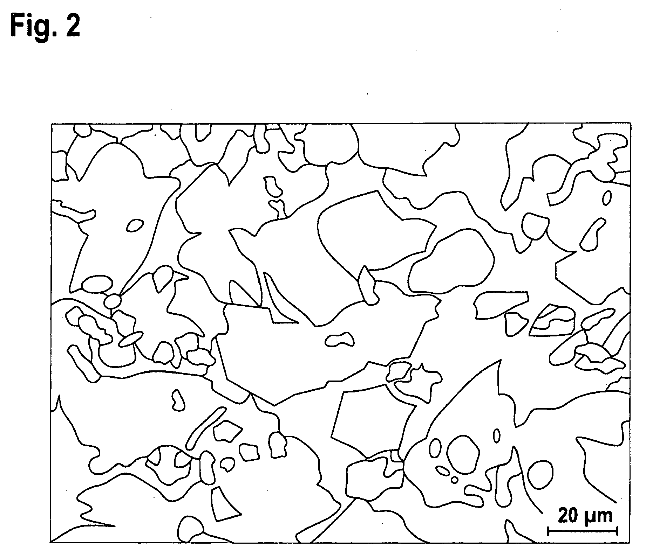

Fig. 1 zeigt ein Schliffbild des Werkstoffs eines derartigen Hufeisens, wobei das Hufeisen nach dem Warmschmieden durch Eintauchen in Wasser abgeschreckt wurde. Fig. 2 zeigt ein Schliffbild des Werkstoffs, wobei das Hufeisen nach dem Warmschmieden an Raumtemperatur langsam abgekühlt wurde.

Es wird deutlich erkennbar, dass im Werkstoff gemäß Fig. 1 der Anteil an α-Phase (heller Teilbereich) wesentlich geringer ist als im Werkstoff gemäß Fig. 2. Mit anderen Worten ist durch das Abschrecken des Werkstoffs nach dem Warmschmieden der Anteil an die Härte und die Verschleißbeständigkeit verbessernder β-Phase im Gefüge erhöht. Der Anteil an β-Phase (dunklerer Umgebungsbereich) beträgt im Werkstoff entsprechend Fig. 2 etwa 27 Gew.-%. Der Anteil an β-Phase im Werkstoff entsprechend Fig. 1 (abgeschreckter Fall) beträgt etwa 67 Gew.-%. Die Härte des abgeschreckten Werkstoffs entsprechend Fig. 1 wurde mit 171 HB bestimmt. Die Härte des passiv abgekühlten Werkstoffs entsprechend Fig. 2 wurde mit 168 HB gemessen.

Die Ergebnisse zeigen demnach, dass durch ein Abschrecken nach dem Vorort-Schmieden des Hufeisens seine Härte und seine Verschleißbeständigkeit weiter günstig beeinflusst werden können.

Im Übrigen sind in den Figuren 1 und 2 als sehr dunkle Bereiche noch die im Gefüge eingebetteten intermetallischen Phasen erkennbar. Durch diese intermetallischen Phasen, vorliegend überwiegend Mangansilizide, ist die Härte des Werkstoffs im Wesentlichen vorgegeben.

## Patentansprüche

1. Verwendung einer Kupfer-Zink-Legierung als Werkstoff für ein Hufeisen, wobei die Legierung aus 59-73 Gew.-% Kupfer, 2,7-8,5 Gew.-% Mangan, 1,5-6,3 Gew.-% Aluminium, 0,2-4 Gew.-% Silizium, 0,2-3 Gew.-% Eisen, 0-2 Gew.-% Blei, 0-2 Gew.-% Nickel, 0-0,4 Gew.-% Zinn, 0-0,1 Gew.-% eines der Elemente Chrom, Vanadium, Titan oder Zirkon, 0-0,0005 Gew.-% Bor, 0 -0,03 Gew.-% Antimon, 0-0,03 Gew.-% Phosphor, 0-0,03 Gew.-% Cadmium, 0-0,05 Gew.-% Kobalt, Rest Zink sowie unvermeidbare Verunreinigungen besteht.

2. Verwendung nach Anspruch 1,
wobei die Legierung 63-73 Gew.-% Kupfer, 2,7-8,3 Gew.-% Mangan, 1,5-6 Gew.-% Aluminium, 0,2-4 Gew.-% Silizium, 0,2-2 Gew.-% Eisen, 0-2 Gew.-% Blei, 0-2 Gew.-% Nickel, 0-0,2 Gew.-% Zinn, Rest Zink sowie unvermeidbare Verunreinigungen umfasst.

3. Verwendung nach Anspruch 1 oder 2,
wobei die Legierung 69-72 Gew.-% Kupfer umfasst.

4. Verwendung nach einem der vorhergehenden Ansprüche,
wobei die Legierung 6-8 Gew.-% Mangan umfasst.

5. Verwendung nach einem der vorhergehenden Ansprüche,
wobei die Legierung 4-6 Gew.-% Aluminium umfasst.

6. Verwendung nach einem der vorhergehenden Ansprüche,
wobei die Legierung 1,5-2,5 Gew.-% Silizium umfasst.

7. Verwendung nach einem der vorhergehenden Ansprüche,
wobei die Legierung 0,5-1,5 Gew.-% Eisen umfasst.

8. Verwendung nach einem der vorhergehenden Ansprüche,
wobei die Legierung 0-1 Gew.-% Blei umfasst.

9. Verwendung nach einem der vorhergehenden Ansprüche,
wobei die Legierung 0-0,2 Gew.-% Nickel umfasst.

10. Hufeisen aus einer Kupfer-Zink-Legierung entsprechend den Merkmalen nach einem der vorhergehenden Ansprüche.

## Claims

1. Use of a copper-zinc alloy as material for a horseshoe, wherein the alloy consists of 59-73% by weight of copper, 2.7-8.5% by weight of manganese, 1.5-6.3% by weight of aluminum, 0.2-4% by weight of silicon, 0.2-3% by weight of iron, 0-2% by weight of lead, 0-2% by weight of nickel, 0-0.4% by weight of tin, 0-0.1% by weight of one of the elements chromium, vanadium, titanium or zirconium, 0-0.0005% by weight of boron, 0-0.03% by weight of antimony, 0-0.03% by weight of phosphorus, 0-0.03% by weight of cadmium, 0-0.05% by weight of cobalt, balance zinc and unavoidable impurities.

2. Use according to Claim 1, wherein the alloy comprises 63-73% by weight of copper, 2.7-8.3% by weight of manganese, 1.5-6% by weight of aluminum, 0.2-4% by weight of silicon, 0.2-2% by weight of iron, 0-2% by weight of lead, 0-2% by weight of nickel, 0-0.2% by weight of tin, balance zinc and unavoidable impurities.

3. Use according to Claim 1 or 2, wherein the alloy comprises 69-72% by weight of copper.

4. Use according to any of the preceding claims, wherein the alloy comprises 6-8% by weight of manganese.

5. Use according to any of the preceding claims, wherein the alloy comprises 4-6% by weight of aluminum.

6. Use according to any of the preceding claims, wherein the alloy comprises 1.5-2.5% by weight of silicon.

7. Use according to any of the preceding claims, wherein the alloy comprises 0.5-1.5% by weight of iron.

8. Use according to any of the preceding claims, wherein the alloy comprises 0-1% by weight of lead.

9. Use according to any of the preceding claims, wherein the alloy comprises 0-0.2% by weight of nickel.

10. Horseshoe composed of a copper-zinc alloy corresponding to the features of any of the preceding claims.

## Revendications

1. Utilisation d'un alliage cuivre-zinc en tant que matériau pour un fer à cheval, dans laquelle l'alliage est constitué par 59 à 73 % en poids de cuivre, 2,7 à 8,5 % en poids de manganèse, 1,5 à 6,3 % en poids d'aluminium, 0,2 à 4 % en poids de silicium, 0,2 à 3 % en poids de fer, 0 à 2 % en poids de plomb, 0 à 2 % en poids de nickel, 0 à 0,4 % en poids d'étain, 0 à 0,1 % en poids d'un des éléments chrome, vanadium, titane ou zirconium, 0 à 0,0005 % en poids de bore, 0 à 0,03 % en poids d'antimoine, 0 à 0,03 % en poids de phosphore, 0 à 0,03 % en poids de cadmium, 0 à 0,05 % en poids de cobalt, le reste étant du zinc et des impuretés inévitables.

2. Utilisation selon la revendication 1, dans laquelle l'alliage comprend 63 à 73 % e poids de cuivre, 2,7 à 8,3 % en poids de manganèse, 1,5 à 6 % en poids d'aluminium, 0,2 à 4 % en poids de silicium, 0,2 à 2 % en poids de fer, 0 à 2 % en poids de plomb, 0 à 2 % en poids de nickel, 0 à 0,2 % en poids d'étain, le reste étant du zinc et des impuretés inévitables.

3. Utilisation selon la revendication 1 ou 2, dans laquelle l'alliage comprend 69 à 72 % en poids de cuivre.

4. Utilisation selon l'une quelconque des revendications précédentes, dans laquelle l'alliage comprend 6 à 8 % en poids de manganèse.

5. Utilisation selon l'une quelconque des revendications précédentes, dans laquelle l'alliage comprend 4 à 6 % en poids d'aluminium.

6. Utilisation selon l'une quelconque des revendications précédentes, dans laquelle l'alliage comprend 1,5 à 2,5 % en poids de silicium.

7. Utilisation selon l'une quelconque des revendications précédentes, dans laquelle l'alliage comprend 0,5 à 1,5 % en poids de fer.

8. Utilisation selon l'une quelconque des revendications précédentes, dans laquelle l'alliage comprend 0 à 1 % en poids de plomb.

9. Utilisation selon l'une quelconque des revendications précédentes, dans laquelle l'alliage comprend 0 à 0,2 % en poids de nickel.

10. Fer à cheval en un alliage cuivre-zinc correspondant aux caractéristiques selon l'une quelconque des revendications précédentes.
